# EUROPÄISCHE PATENTANMELDUNG

(11) **EP 4 546 065 A1**
(43) Veröffentlichungstag der Anmeldung: **30.04.2025**
(21) Anmeldenummer: 23205581.4
(22) Anmeldetag: 24.10.2023
(51) Int. Cl.: G05B 19/418

(54) **VERFAHREN ZUM BETREIBEN EINER AUTONOMEN FABRIK MIT ZUMINDEST ZWEI ZUEINANDER BENACHBARTEN ANLAGEN, COMPUTERPROGRAMMPRODUKT, COMPUTERLESBARES SPEICHERMEDIUM SOWIE AUTONOME FABRIK**

(71) Anmelder: Siemens Aktiengesellschaft, 80333 München (DE)
(72) Erfinder: Phan, Thomy, 81369 München (DE); Ritz, Fabian, 81475 München (DE); Schmid, Reiner, 80538 München (DE); Sedlmeier, Andreas, 85354 Freising (DE); Wieghardt, Jan, 81475 München (DE)
(74) Vertreter: Siemens Patent Attorneys

(57) **Zusammenfassung**

Die Erfindung betrifft ein Verfahren zum Betreiben einer autonomen Fabrik (10) mit zumindest zwei zueinander benachbarten Anlagen (12, 14), mit den Schritten: Bereitstellen einer ersten Anlage (12) mit einem ersten Produktionsplan (24), wobei die erste Anlage (12) ein erstes maschinelles Lernmodell (20) aufweist; Bereitstellen einer zweiten Anlage (14) mit einem zweiten Produktionsplan (26), wobei die zweite Anlage (14) ein zweites maschinelles Lernmodell (22) aufweist, und wobei die zweite Anlage (14) zur ersten Anlage (12) benachbart ist; Übermitteln eines Werkstücks (18) von der ersten Anlage (12) an die zweite Anlage (14); Erzeugen einer Feedbacknachricht (38) mittels der zweiten Anlage (14); und Übertragen der Feedbacknachricht (38) von der zweiten Anlage (14) an die erste Anlage (12) mittels einer Kommunikationseinrichtung (48) der zweiten Anlage (14). Ferner betrifft die Erfindung ein Computerprogrammprodukt, ein computerlesbares Speichermedium sowie eine autonome Fabrik (10).

## Beschreibung

Die Erfindung betrifft ein Verfahren zum Betreiben einer autonomen Fabrik mit zumindest zwei zueinander benachbarten Anlagen gemäß dem geltenden Patentanspruch 1. Ferner betrifft die Erfindung ein Computerprogrammprodukt, ein computerlesbares Speichermedium sowie eine autonome Fabrik.

Aus dem Stand der Technik ist bereits das sogenannte optimale Routing von Werkstücken innerhalb einer Fabrik bekannt, in der sich die Transportwege zu den jeweils notwendigen Bearbeitungsschritten zur Laufzeit ändern können. Die Größe der betrachteten Systeme oder die Häufigkeit der Änderungen am System machen eine lokalisierte Neuplanung notwendig, das heißt das Ziel ist, dezentral mit lokalen Informationen, insbesondere über die Topologie der nächsten Nachbarn, die global optimalen Routen innerhalb der Fabrik unter Berücksichtigung von Kapazitäts- und Aktionseinschränkungen zu finden.

Probleme dieser Art entstehen beispielsweise in autonomen Fabriken, in denen die Einrichtungen der Fabrik, beispielsweise Förderbänder, Maschinen zur Bearbeitung der Werkstücke, als autonom agierende Steuerungseinheiten ausgelegt werden. Mehrere autonom agierende Steuerungseinheiten, welche auch als Anlagen bezeichnet werden, bilden dabei das Gesamtsystem. Die Anlagen dieses Systems realisieren die Transportwege, beispielsweise in Form von Förderbändern. Anlagen können bei Bedarf aus dem System entfernt oder zu dem System hinzugefügt werden, wodurch die verfügbaren Transportwege entsprechend verändert werden. Liegt einer Maschine ein Werkstück vor, so entscheidet diese autonom auf Basis lokaler Informationen, zum Beispiel Informationen über die Auslastung der nächsten Nachbarn sowie das Ziel des vorliegenden Werkstücks, zu welcher benachbarten, das heißt direkt mit ihr verbundenen Maschine sie dieses Werkstück weiterleitet, was auch als Aktion bezeichnet wird. Eine Maschine unterliegt dabei bestimmten Einschränkungen. Diese kann zu einem Zeitpunkt nur eine begrenzte Anzahl von Werkstücken vorhalten und eine begrenzte Anzahl an Aktionen ausführen. Das Ziel des Systems ist, alle Werkstücke so zu ihrer jeweiligen Zielposition zu routen und zu bearbeiten, sodass das Gesamtverhalten der Fabrik optimal ist.

Existierende Lösungen, beispielsweise unter Verwendung von Planning oder Single-Agent Reinforcement Learning (RL), sind nicht in der Lage, die zuvor beschriebenen Eigenschaften zu erreichen. Auch der direkte Einsatz von Multi-Agent Reinforcement Learning (MARL) erreicht bereits bei geringer Problemgröße keine akzeptable Lösungsqualität mehr. Folglich existieren bisher nur Ansätze zur Lösung von Systemen, die abweichende Annahmen treffen, beispielsweise statische Transportwege annehmen oder die Existenz globaler Informationen voraussetzen, was zur Nicht-Modularität führen kann.

Aufgabe der vorliegenden Erfindung ist es, ein Verfahren, ein Computerprogrammprodukt, ein computerlesbares Speichermedium sowie eine autonome Fabrik zu schaffen, mittels welchen Werkstücke verbessert hergestellt werden können.

Diese Aufgabe wird durch ein Verfahren, ein Computerprogrammprodukt, ein computerlesbares Speichermedium sowie eine autonome Fabrik gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben einer autonomen Fabrik mit zumindest zwei zueinander benachbarten Anlagen. Es erfolgt das Bereitstellen einer ersten Anlage mit einem ersten Produktionsplan, wobei die erste Anlage ein erstes maschinelles Lernmodell aufweist. Es wird eine zweite Anlage mit einem zweiten Produktionsplan bereitgestellt, wobei die zweite Anlage ein zweites maschinelles Lernmodell aufweist, und wobei die zweite Anlage zur ersten Anlage benachbart ist. Es wird das Werkstück von der ersten Anlage an die zweite Anlage übermittelt, was im Folgenden als Routing bezeichnet wird. Es erfolgt das Erzeugen einer Feedbacknachricht mittels der zweiten Anlage. Es wird die Feedbacknachricht von der zweiten Anlage an die erste Anlage mittels einer Kommunikationseinrichtung der zweiten Anlage übermittelt.

Insbesondere schlägt somit die Erfindung vor, die bereits benannten Probleme und Eigenschaften im Sinne eines dezentralen MARL mit der Variante des Independent Learning (IL) zu erfüllen. Obwohl eine entsprechende Trainingsdauer der Anzahl der Anlagen mit dieser Methode linear skaliert, zeigt sich in der Praxis, dass die Qualität der gefundenen Lösungen mit steigender Zahl der Anlagen stark sinkt. Dies hat bisher eine Anwendung in der oben beschriebenen Problemdomäne verhindert.

Insbesondere, um im Umfeld einer autonomen Fabrik entsprechend die Produktivität zu steigern, sind entsprechende Eigenschaften wichtig, die sich in dem Aufbau eines sogenannten Multi-Agenten-Systems (MAS) widerspiegeln müssen. Dabei entspricht ein Agent einer Anlage. Insbesondere ist dabei die Modularität eine wichtige Eigenschaft. Eine solche autonome Fabrik muss einfach aus Blöcken von Anlagen zusammengesetzt werden können. Das heißt, Anlagen können je nach Anordnung in unterschiedlichen Zusammensetzungen, zum Beispiel kleineren oder größeren Verbunden, eingesetzt werden. Ferner ist die Heterogenität von Wichtigkeit, wobei die Anlagen hierbei technisch unterschiedlich ausgeprägt sind, und hierbei unterschiedliche Aufgaben übernehmen. Dies umfasst auch Anlagen verschiedener Hersteller oder verschiedener Versionsstände. Des Weiteren ist auch die Skalierung ein wichtiger Faktor. Die Optimierung der Fabrik darf auch bei einer steigenden Anzahl von Anlagen nur in beherrschbarer Weise vom globalen Optimum abweichen.

Insbesondere ist somit vorgesehen die Verwendung von MARL in der Variante von IL zu modifizieren.

Dies hat insbesondere den Vorteil, dass die Anlagen technisch unterschiedlich ausgeprägt sein können, die Anlagen in unterschiedlichen Szenarien, zum Beispiel kleineren oder größeren Verbunden, trainiert und eingesetzt werden können sowie, dass weder während des Trainings, noch zur Laufzeit globale Informationen benötigt werden. Anlagen lernen und unterscheiden auf Basis lokaler Informationen. Eine Parallelisierung des Trainings auf Anlagenebene ist somit möglich.

Des Weiteren ergeben sich durch den Einsatz der erfindungsgemäßen Methode die Eigenschaften der Robustheit. Es gibt keine zentrale Komponente, deren Ausfall das Gesamtsystem beeinträchtigen würde. Des Weiteren kann eine Generalisierung erreicht werden. Werden Anlagen mit der zu erwartenden Dynamik trainiert, zum Beispiel mit unterschiedlicher Anzahl direkter Nachbarn, ist eine entsprechende Generalisierung möglich. Zum Beispiel kann die Robustheit gegenüber Ausfällen von Nachbarn ohne zusätzliche Maßnahmen dadurch gesteigert werden.

Die Erfindung verbessert somit den Trainingsprozess des dezentralen MARL gegenüber dem Stand der Technik. Bei gleicher Anzahl an Trainingsdaten und Optimierungsschritten und der Verwendung derselben Reinforcement-Learning-Algorithmen (RL-Algorithmen) erzielt die Erfindung signifikante verbesserte Lösungen. Einfache Probleme, die der Stand der Technik bereits lösen kann, können durch die Erfindung mit geringerem Aufwand, insbesondere bezüglich Daten und Rechenbudget, gelöst werden. Darüber hinaus können mit der Erfindung Probleme gelöst werden, die im Stand der Technik hinsichtlich des Aufwands und/oder der Lösungsqualität nicht gelöst werden können.

Entscheidend ist dabei insbesondere die Rekombination der RL-Tupel der beiden an einem Routing beteiligten Anlagen zum Training der ersten Anlage. Mit Training ist eine Anpassung des Lernmodells mittels eines RL-Algorithmus gemeint. Mit RL-Tupel sind diejenigen Daten gemeint, die für die Anpassung verwendet werden.

Rekombiniert werden die ursprüngliche Observation und die Aktion der ersten, sendenden Anlage mit der resultierenden Observation und dem Reward der zweiten, empfangenden Anlage. Mit ursprünglich ist der Zeitpunkt vor dem Routing gemeint, mit resultierend der Zeitpunkt nach dem Routing. Mit Reward ist ein Signal gemeint, das eine Unterscheidung zwischen Erfolg und Misserfolg ermöglicht.

Für diese Rekombination ist die Übermittlung einer Nachricht, im Folgenden Feedbacknachricht genannt, von der zweiten Anlage an die erste Anlage mittels Kommunikation erforderlich. Die Feedbacknachricht enthält die resultierende Observation und den Reward der zweiten Anlage.

Im Kontext des Routing-Vorgangs von einer ersten Anlage zu einer zweiten Anlage sieht die Erfindung vor, alle übrigen Bestandteile der RL-Tupel zu verwerfen. Das betrifft den Reward und die resultierende Observation der ersten Anlage sowie die ursprüngliche Observation und die Aktion der zweiten Anlage. Daraus resultiert ein vereinfachtes Lernverhalten für die in der Erfindungsmeldung betrachteten Systeme.

Die beschriebene Rekombination der RL-Tupel ist pro Routing mit den jeweils sendenden und empfangenden Anlagen durchzuführen, insbesondere, wenn zwei oder mehr Werkstücke zwischen drei oder mehr Anlagen geroutet werden.

Zusätzlich können die durch das Training angepassten Parameter des Lernmodells der ersten Anlage zur Anpassung der Parameter des Lernmodells der zweiten Anlage genutzt werden. Dafür kann eine Nachricht mit den Parametern, im Folgenden Parameternachricht genannt, von der ersten Anlage an die zweite Anlage mittels Kommunikation übermittelt werden. Dies würde gemäß gängiger Praxis nicht pro Routing-Vorgang, sondern zyklisch nach mehreren Trainingsschritten des Lernmodells der ersten Anlage geschehen.

Ferner ermöglicht grundsätzlich die Erfindung den Einsatz von dezentralem MARL eine Modularität der Anlagen, das heißt in von der Laufzeit abweichender Szenarien zu trainiert zu werden. Beispielsweise können autonome Steuerungsanlagen in kleinen, isolierten Verbunden trainiert werden und zur Laufzeit in größeren Verbunden, beispielsweise beim Endkunden, eingesetzt werden. Ebenso ist es jederzeit möglich, einzelne Anlagen temporär zu entfernen, zum Beispiel zu Wartungszwecken, oder dauerhaft auszutauschen, zum Beispiel durch später entwickelte oder verbesserte Varianten. Die Erfindung verschafft somit einen entsprechenden technischen Vorteil. Zum einen können bereits zuvor lösbare Probleme nun zu geringen Kosten, insbesondere Daten- und Rechenbudget, gelöst werden. Zum anderen ist es nun möglich, für zuvor unlösbare, komplexe Probleme Lösungen zu finden.

Auf Basis des Lernmodells können dann die Anlagen beispielsweise entscheiden, über welches Förderband an welche anderen Anlagen das Werkstück gesendet wird. Insbesondere können somit auf Basis des Lernmodells Steuersignale für die Förderbänder erzeugt werden.

Gemäß einer vorteilhaften Ausgestaltungsform wird in Abhängigkeit von der empfangenen Feedbacknachricht zumindest das erste maschinelle Lernmodell angepasst. Insbesondere kann das erste maschinelle Lernmodell somit exakt nachvollziehen, ob das Werkstücke auch bei der korrekten zweiten Anlage angekommen ist. Auf Basis der empfangenen Feedbacknachricht kann somit eine präzise Anpassung des maschinellen Lernmodells erfolgen, wodurch zukünftig verbessert die autonome Fabrik betrieben werden kann.

Weiterhin vorteilhaft ist, wenn in Abhängigkeit von dem angepassten Lernmodell eine zukünftige Übermittlung eines Werkstücks zur zweiten Anlage angepasst wird. Beispielsweise kann somit durch das angepasste Lernmodell bestimmt werden, dass das Werkstück zu einem falschen Zeitpunkt an die zweite Anlage geschickt wurde beziehungsweise über eine falsche Route, beispielsweise ein falsches Förderband, entsprechend zur zweiten Anlage befördert wurde. Es kann dann auf Basis des angepassten Lernmodells nun zukünftig ein solcher Fehler entsprechend verhindert werden, wodurch ein verbesserter Betrieb der autonomen Fabrik realisiert werden kann.

Es hat sich weiterhin als vorteilhaft erwiesen, wenn das zweite maschinelle Lernmodell auf Basis des ersten maschinellen Lernmodells angepasst wird. Eine Variante ist, die bereits angepassten Parameter des Lernmodells der ersten Anlage zur partiellen Anpassung der Parameter des Lernmodells zweiten Anlage zu verwenden, beispielsweise durch Mittelung der Werte. Eine andere Variante ist das sogenannte Parameter Sharing, bei dem das maschinelle Lernmodell der zweiten Anlage die Parameter des maschinellen Lernmodells der ersten Anlage übernimmt, beispielsweise durch regelmäßige Kopie. Somit kann insbesondere der zweite Produktionsplan angepasst werden, wodurch wiederum ein verbesserter Betrieb der autonomen Fabrik realisiert werden kann.

In einer weiteren vorteilhaften Ausgestaltungsform ist vorgesehen, dass der erste Produktionsplan und der zweite Produktionsplan in Abhängigkeit von einer aktuellen Umgebungsbedingung bereitgestellt werden. Insbesondere handelt es sich bei der aktuellen Umgebungsbedingung um Daten, beispielsweise Sensordaten, im RL genannt Observation. Mit anderen Worten kann die Anlage entsprechend den Produktionsplan in Abhängigkeit von der aktuellen Umgebungsbedingung anpassen, und beispielsweise entscheiden, an welche zweite Anlage das Werkstück übergeben wird. Somit kann eine autonome Fabrik bereitgestellt werden, mittels welcher besser, insbesondere bezüglich eines Optimierungskriteriums, ein Werkstück hergestellt werden kann.

Eine weitere vorteilhafte Ausgestaltungsform sieht vor, dass eine jeweilige lokale aktuelle Umgebungsbedingung mittels der Anlagen erfasst wird und ein jeweiliger Produktionsplan in Abhängigkeit von der erfassten, aktuellen Umgebungsbedingung angepasst wird. Somit handelt es sich insbesondere lediglich um aktuelle Umgebungsbedingungen, sodass jeder Agent beziehungsweise jede Anlage selbstständig entscheiden kann, welche Aktion auf Basis der aktuellen Umgebungsbedingung durchzuführen ist. Es kann eine hochautonome Fabrik bereitgestellt werden.

Ferner hat es sich als vorteilhaft erwiesen, wenn beim Produktionsplan ein Zeitbedarf der autonomen Fabrik optimiert wird. Insbesondere kann somit unter geringstmöglichem Zeitbedarf eine Optimierung durchgeführt werden. Dadurch kann ein Werkstück entsprechend schnell produziert werden, wobei insbesondere dann wiederum eine Anzahl der erzeugten Werkstücke erhöht werden kann.

Weiterhin vorteilhaft ist, wenn beim Produktionsplan ein Ressourcenverbrauch der autonomen Fabrik optimiert wird. Beispielsweise kann als Optimierungskriterium auch der Ressourcenverbrauch vorgegeben werden, mit anderen Worten ein geringstmöglicher Ressourcenverbrauch vorgegeben werden. Somit kann ressourcenschonend eine Vielzahl an Werkstücken hergestellt werden.

Eine weitere vorteilhafte Ausgestaltungsform sieht vor, dass beim Produktionsplan ein Durchsatz der autonomen Fabrik optimiert wird. Insbesondere kann somit die Stückzahl erhöht werden, und ein verbesserter Betrieb der autonomen Fabrik bereitgestellt werden.

Eine weitere vorteilhafte Ausgestaltungsform sieht vor, dass zumindest das erste maschinelle Lernmodell und/oder das zweite maschinelle Lernmodell jeweils als künstliches neuronales Netzwerk (KNN) bereitgestellt werden. Beispielsweise kann das neuronale Netzwerk in Form eines dichten neuronalen Netzwerks bereitgestellt werden. Somit kann eine kompakte Repräsentation der Anlagensteuerung als maschinelles Lernmodell bereitgestellt werden, welches insbesondere in der Lage ist, entsprechend angepasst zu werden.

Gemäß einer weiteren vorteilhaften Ausgestaltungsform wird eine Zielposition des Werkstücks beim Übertragen des Werkstücks an das Werkstück gebunden bereitgestellt. Mit anderen Worten kann beispielsweise das Werkstück einen entsprechenden Identifizierungscode, beispielsweise ein Label, aufweisen. Das Label kann nachverfolgt werden und wiederum bei einer Übernahme des Werkstücks innerhalb der Anlage gescannt werden. Somit kann die zweite, empfangende Anlage überprüfen, ob das Werkstück korrekt bei ihr angekommen ist. Die zweite Anlage selbst kann dann wiederum die korrekte Ankunft entsprechend an die erste, sendende Anlage übertragen. Somit kann eine dezentrale autonome Fabrik bereitgestellt werden.

Es hat sich weiterhin als vorteilhaft erwiesen, wenn eine Kommunikation zwischen den beiden Anlagen dezentral durchgeführt wird. Mit anderen Worten kann zwischen der ersten Anlage und der zweiten Anlage beispielsweise die direkte Kommunikation, beispielsweise kabelgebunden oder auch kabellos, durchgeführt werden. Somit ist eine einfache Kommunikation zwischen den Anlagen ermöglicht. Insbesondere kann somit ressourcenschonend eine Kommunikation innerhalb der autonomen Fabrik realisiert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung daher auch ein computerlesbares Speichermedium mit dem Computerprogrammprodukt.

Ein weiterer Aspekt der Erfindung betrifft eine autonome Fabrik mit zumindest zwei Anlagen, wobei die autonome Fabrik zum Durchführen eines Verfahrens nach dem vorhergehenden Aspekt ausgebildet ist. Insbesondere wird das Verfahren mittels der autonomen Fabrik durchgeführt.

Eine jeweilige Anlage weist hierzu ein maschinelles Lernmodell auf, um die entsprechenden Aufgaben zu erfüllen.

Vorteilhafte Ausgestaltungsformen des Verfahrens sind als vorteilhafte Ausgestaltungsformen des Computerprogrammprodukts, des computerlesbaren Speichermediums sowie der autonomen Fabrik anzusehen. Die autonome Fabrik weist hierzu gegenständliche Merkmale auf, um entsprechende Verfahrensschritte durchführen zu können.

Hier und im Folgenden kann ein KNN als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein KNN ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") eine oder mehrere Tensorprozessoreinheiten, TPU (englisch: "tensor processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: eine schematische Seitenansicht einer Ausführungsform einer autonomen Fabrik;
- FIG 2: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

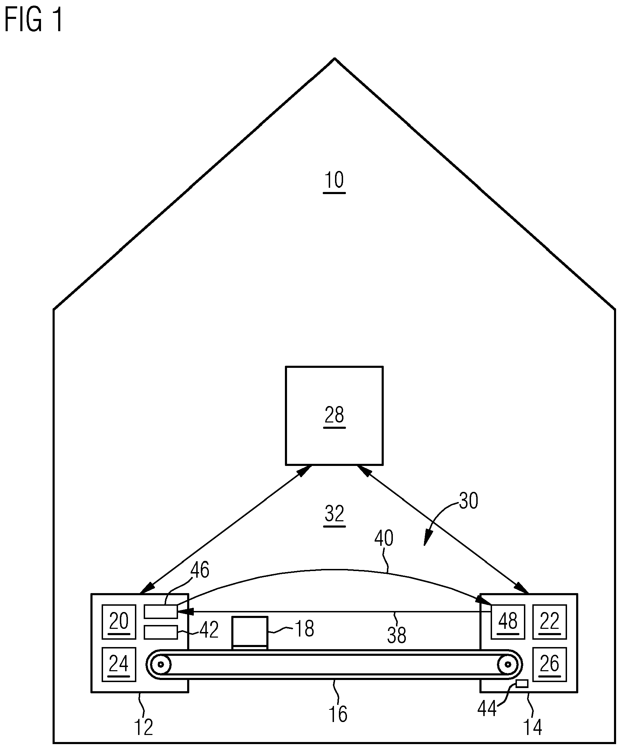

FIG 1 zeigt ein schematisches Blockschaltbild gemäß einer Ausführungsform einer autonomen Fabrik 10. Die autonome Fabrik 10 weist zumindest eine erste Anlage 12 sowie eine zweite Anlage 14 auf. Die erste Anlage 12 sowie die zweite Anlage 14 können auch jeweils als Anlagen bezeichnet werden. Die erste Anlage 12 und die zweite Anlage 14 sind benachbart zueinander ausgebildet. Insbesondere bedeutet dies, dass beispielsweise ein Förderband 16 zwischen diesen Anlagen 12, 14 vorhanden ist. Die erste Anlage 12 kann beispielsweise ein Werkstück 18 über das Förderband 16 von der ersten Anlage 12 an die zweite Anlage 14 übermitteln.

Ferner zeigt die FIG 1 insbesondere, dass die erste Anlage 12 ein erstes maschinelles Lernmodell 20 aufweisen kann und die zweite Anlage 14 ein zweites maschinelles Lernmodell 22 aufweisen kann. Ferner weist die erste Anlage 12 einen ersten Produktionsplan 24 und die zweite Anlage 14 weist einen zweiten Produktionsplan 26 auf.

Ferner ist insbesondere gezeigt, dass die autonome Fabrik 10 zusätzlich ein Überwachungssystem 28 aufweisen kann. Das Überwachungssystem 28 kann beispielsweise in Form einer elektronischen Recheneinrichtung ausgebildet sein. Das Überwachungssystem 28 kann insbesondere mit den Produktionsanlagen 12, 14 interagieren.

Alternativ kann jede Produktionsanlage 12, 14 ein eigenes dezentrales Überwachungssystem 42, 44 aufweisen, welche die jeweilige lokale Umgebung erfassen. Damit entfällt die Notwendigkeit des zentralen Überwachungssystems 28 und die Kommunikation der Produktionsanlagen 12, 14 mit diesem.

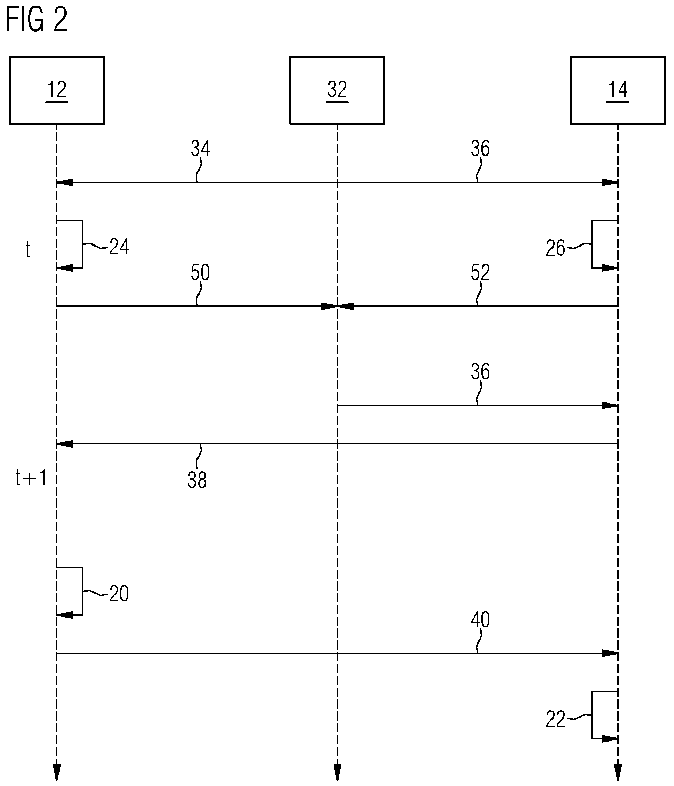

FIG 2 zeigt ein schematisches Ablaufdiagramm gemäß einer Ausführungsform des Verfahrens. Insbesondere zeigt die FIG 2, dass die erste Anlage 12 und die zweite Anlage 14 mit einer Umgebung 32 kommunizieren.

Insbesondere sind dabei ein erster Zeitschritt t und ein zweiter Zeitschritt t+1 gezeigt. In einem ersten Zeitschritt t werden Umgebungsbedingungen 34, 36 der Umgebung 32 von den jeweiligen Produktionsanlagen 12, 14 erfasst. Beispielsweise kann die erste Anlage 12 eine erste Umgebungsbedingung 34 erfassen und die zweite Anlage 14 kann eine zweite Umgebungsbedingung 36 erfassen. Insbesondere handelt es sich bei den Umgebungsbedingungen 34, 36 um aktuelle, insbesondere um aktuelle und lokale Umgebungsbedingungen 34, 36. Die Erfassung geschieht entweder mittels des globalen Überwachungssystems 28 oder mittels der lokalen Überwachungssysteme 42, 44.

Insbesondere zeigt die FIG 2 ferner, dass dann auf Basis der ersten Umgebungsbedingung 34 ein erster Produktionsplan 24 bestimmt wird und auf Basis der zweiten Umgebungsbedingung 36 wird der zweite Produktionsplan 26 bestimmt wird. Dann werden gemäß den Produktionsplänen 24, 26 in der Umgebung 32 die Aktionen 50, 52 ausgeführt. Damit kann insbesondere das Werkstück 18 zur zweiten Anlage 14 übermittelt werden. Nach der Ausführung der Aktionen 50, 52 wird von der zweiten Anlage 14 die Umgebungsbedingung 36 erneut bestimmt und eine sogenannte Feedbacknachricht 38 erzeugt, sollte das Werkstück 18 bei der zweiten Anlage 14 eingetroffen sein. Diese Feedbacknachricht 38 wird dann an die erste Anlage 12 übermittelt. Es erfolgt nun die Anpassung des maschinellen Lernmodells 20 insbesondere in Abhängigkeit von der durch die zweite Anlage 14 erzeugten Feedbacknachricht 38. Dann erfolgt das Erstellen einer Parameternachricht 40 durch die erste Anlage 12 und Übermittlung an die zweite Anlage 14. Dort erfolgt eine Anpassung des maschinellen Lernmodells 22 insbesondere in Abhängigkeit von Feedbacknachricht 40. Anschließend beginnt der Zyklus von vorne.

Insbesondere zeigt somit die FIG 2 ein Verfahren zum Betreiben der autonomen Fabrik 10. Es wird die erste Anlage 12 mit dem ersten Produktionsplan 24 bereitgestellt, wobei die erste Anlage 12 ein erstes maschinelles Lernmodell 20 aufweist. Es wird die zweite Anlage 14 mit dem zweiten Produktionsplan 26 bereitgestellt, wobei die zweite Anlage 14 das zweite maschinelle Lernmodell 22 aufweist, und wobei die zweite Anlage 14 zur ersten Anlage 12 benachbart ist. Es wird das Werkstück 18 von der ersten Anlage 12 an die zweite Anlage 14 übermittelt. Es erfolgt dann das Erzeugen der Feedbacknachricht 38 mittels der zweiten Anlage 14 und das Übertragen der Feedbacknachricht 38 von der zweiten Anlage 14 an die erste Anlage 12 mittels einer Kommunikationseinrichtung 48 der zweiten Anlage 14. Die erste Anlage 12 weist ebenfalls eine Kommunikationseinrichtung 46 auf.

Dabei kann insbesondere vorgesehen sein, dass in Abhängigkeit von der empfangenen Feedbacknachricht 38 zumindest das erste maschinelle Lernmodell 20 angepasst wird. Ferner durch die Anpassung des Lernmodells 20 die Erstellung des Produktionsplans 24 optimiert gemäß den globalen Zielen der Fabrik 10 optimiert, was eine zukünftige Übermittlung des Werkstücks 18 zur zweiten Anlage 14 berücksichtigt.

Des Weiteren kann vorgesehen sein, dass in Abhängigkeit der Parameternachricht das zumindest zweite maschinelle Lernmodell 22 angepasst wird. Ferner wird durch die Anpassung des Lernmodells 22 die Erstellung des Produktionsplans 26 gemäß den globalen Zielen der Fabrik 10 optimiert.

Ferner kann vorgesehen sein, dass der erste Produktionsplan 24 und/oder der zweite Produktionsplan 26 in Abhängigkeit der aktuellen Umgebungsbedingung 34, 36 bereitgestellt wird. Dabei ist insbesondere eine jeweilige lokale aktuelle Umgebungsbedingung 34, 36 mittels der Anlagen 12, 14 erfasst und ein jeweiliger Produktionsplan 24, 26 wird in Abhängigkeit der erfassten, aktuellen Umgebungsbedingung 34, 36 angepasst.

Dabei kann ferner vorgesehen sein, dass beim Produktionsplan 24, 26 ein Zeitbedarf der autonomen Fabrik 10 optimiert wird. Ferner kann beim Produktionsplan 24, 26 ein Ressourcenverbrauch der autonomen Fabrik 10 optimiert werden. Des Weiteren kann beim Produktionsplan 24, 26 ein Durchsatz der autonomen Fabrik 10 optimiert werden.

Ebenfalls kann vorgesehen sein, dass zumindest das erste maschinelle Lernmodell 20 und/oder das zweite maschinelle Lernmodell 22 jeweils als neuronales Netzwerk, insbesondere als künstliches neuronales Netzwerk (KNN), bereitgestellt werden.

Des Weiteren kann vorgesehen sein, dass eine Zielposition des Werkstücks 18 beim Übertragen des Werkstücks 18 an das Werkstück 18 gebunden bereitgestellt wird.

Ebenfalls ist vorgesehen, dass eine Kommunikation zwischen den beiden Anlagen 12, 14 dezentral, insbesondere mittels der Kommunikationseinrichtungen 46, 48 durchgeführt wird.

Insbesondere beschreibt somit die FIG 2, dass ein sogenanntes MARL-System verwendet wird in der Variante des sogenannten Independent Learnings (IL), und somit das Verfahren modifiziert wird, jedoch unter genau beschriebenen Verfahrensaspekten.

Insbesondere bei dem IL agieren mehrere autonome Steuerkomponenten, insbesondere die Anlagen 12, 14 in einem gemeinsamen Environment, insbesondere der Umgebung 32. Für alle Anlagen 12, 14 gilt einmal je Zeitschritt t wählt die Anlage 12, 14 eine Aktion auf Basis lokaler Informationen, insbesondere der sogenannten Observationen, gemäß dem vorgegebenen Produktionsplan 24, 26. Nach Ausführung der Aktion in der Umgebung 32 erhält jede Anlage 12, 14 neue Informationen und ein entsprechendes Feedbacksignal, welches auch als Reward bezeichnet werden kann und Teil der Feedbacknachricht 38 ist. Mit diesen Daten, insbesondere ursprüngliche Observation, gewählte Aktion, neue Observation und Feedbacksignal, teils auch bereits als Reinforcement Learning-Tupel (RL-Tupel) bezeichnet, kann die Anlage 12, 14 die entsprechende Strategie beziehungsweise den Produktionsplan 24, 26 mittels eines RL-Algorithmus anpassen. Dies kann insbesondere auch als Training bezeichnet werden.

Insbesondere als Teile des dezentralen Systems können die Anlagen 12, 14 nicht das gesamte System, sondern nur benachbarte Anlagen 12, 14, das Förderband 16 und das Werkstück 18 beobachten. Die Information über die Zielposition des Werkstücks 18 ist dabei an das Werkstück 18 gekoppelt und ist nur der Anlage 12, 14 zugänglich, die das Werkstück 18 aktuell vorliegen hat. Im oben dargestellten Beispiel ist beispielsweise die Anlage 14 die Zielposition. Diese kann in der Praxis aber auch weiter entfernt sein, dann sind beispielsweise mehrere Routing-Vorgänge mehrerer Anlagen 12, 14 nacheinander erforderlich, bis das Werkstück 18 an der Zielposition angekommen ist.

Der Lernprozess vom IL, wie bislang umgesetzt, sieht vor, dass jede Anlage 12, 14 mit ihren lokalen Informationen, insbesondere der ursprünglichen Observation, gewählte Aktion, neue Observation, individuelles Feedback, für die Verbesserung der individuellen Strategie beziehungsweise des individuellen Produktionsplans 24, 26 verwendet.

Aufgrund der dezentralen Modellierung verfügt nur eine empfangende Anlage 12, 14 eines Routing-Vorgangs exaktes Feedback mittels des Labels des Werkstücks 18 und auch nur dann, wenn sie die Zielposition des jeweiligen Werkstücks 18 ist. Die sendende Anlage, im vorliegenden Ausführungsbeispiel insbesondere die erste Anlage 12, die den Routing-Vorgang initiiert hat, sowie alle eventuell zuvor beteiligten Anlagen 12, 14 verfügen nicht über dieses Feedback. Das führt in der Praxis zu den entsprechenden Lernproblemen, die umso größer sind, umso mehr Routingvorgänge und Anlagen 12, 14 in der gesamten autonomen Fabrik 10 beteiligt sind.

Um diesen zu begegnen, kombiniert die Erfindung, abweichend vom klassischen MARL, die Informationen der beiden an einem Routingvorgang beteiligten Anlagen 12, 14, insbesondere die ursprüngliche Observation und Aktionen der sendenden Anlage, resultierenden Observation und Reward der empfangenden Anlage, und verwendet dieses Tupel für die Optimierung der entsprechenden Strategie der Anlage 12. Die Strategie der Anlage 14 kann angepasst werden, indem die optimierte Strategie der Anlage 12 teilweise oder ganz übernommen wird, beispielsweise über eine gewichtete Mittelung oder einen vollständigen Kopiervorgang. Dies wird in der Literatur als Parameter Sharing bezeichnet

Um dieses entsprechende Tupel zu erstellen und eine optimierte Strategie teilweise oder ganz zu kopieren, werden während des Trainings Informationen der beiden beteiligten Anlagen 12, 14 benötigt. Dies erfordert die Kommunikation, jedoch nur in dezentraler Form, sodass die oben definierten Systemeigenschaften weiterhin beibehalten bleiben. Da an einem Routing immer genau zwei Anlagen 12, 14 beteiligt sind, sind die notwendige Bandbreite und Latenz der Kommunikation konstant. Theoretisch entspricht die maximale Anzahl der globalen Kommunikationsvorgänge dem Produkt aus der Anzahl der Anlagen 12, 14 und dem Verbindungsgrad der Anlagen, insbesondere der Anzahl der nächsten Nachbarn. In der Praxis ist der Verbindungsgrad jedoch insbesondere deutlich kleiner als die Anzahl der Anlagen 12, 14 im Gesamtsystem, zum Beispiel vier bei einem zweidimensionalen Grid. Somit bleibt die Skalierung gewährleistet.

## Patentansprüche

1. Verfahren zum Betreiben einer autonomen Fabrik (10) mit zumindest zwei zueinander benachbarten Anlagen (12, 14), mit den Schritten:
- Bereitstellen einer ersten Anlage (12) mit einem ersten Produktionsplan (24), wobei die erste Anlage (12) ein erstes maschinelles Lernmodell (20) aufweist;
- Bereitstellen einer zweiten Anlage (14) mit einem zweiten Produktionsplan (26), wobei die zweite Anlage (14) ein zweites maschinelles Lernmodell (22) aufweist, und wobei die zweite Anlage (14) zur ersten Anlage (12) benachbart ist;
- Übermitteln eines Werkstücks (18) von der ersten Anlage (12) an die zweite Anlage (14);
- Erzeugen einer Feedbacknachricht (38) mittels der zweiten Anlage (14); und
- Übertragen der Feedbacknachricht (38) von der zweiten Anlage (14) an die erste Anlage (12) mittels einer Kommunikationseinrichtung (48) der zweiten Anlage (14).

2. Verfahren nach Anspruch 1, **dadurch gekennzeichnet, dass** in Abhängigkeit von der empfangenen Feedbacknachricht (38) zumindest das erste maschinelle Lernmodell (20) angepasst wird.

3. Verfahren nach Anspruch 2, **dadurch gekennzeichnet, dass** in Abhängigkeit von dem angepassten ersten maschinellen Lernmodell (20) eine zukünftige Übermittlung eines Werkstücks (18) zur zweiten Anlage (14) angepasst wird.

4. Verfahren nach einem der vorhergehenden Ansprüche, **dadurch gekennzeichnet, dass** in Abhängigkeit von der erzeugten Feedbacknachricht (38) eine Parameternachricht (40) erzeugt wird und zumindest das zweite maschinelle Lernmodell (22) in Abhängigkeit von der Parameternachricht (40) angepasst wird.

5. Verfahren nach einem der vorhergehenden Ansprüche, **dadurch gekennzeichnet, dass** der erste Produktionsplan (24) und der zweite Produktionsplan (26) in Abhängigkeit einer aktuellen Umgebungsbedingung (34, 36) bereitgestellt wird.

6. Verfahren nach Anspruch 5, **dadurch gekennzeichnet, dass** eine jeweilige lokale aktuelle Umgebungsbedingung (34, 36) mittels der Anlagen (12, 14) erfasst wird und ein jeweiliger Produktionsplan (24, 26) in Abhängigkeit der erfassten, aktuellen Umgebungsbedingung (34, 36) angepasst wird.

7. Verfahren nach einem der vorhergehenden Ansprüche, **dadurch gekennzeichnet, dass** beim Produktionsplan (24, 26) ein Zeitbedarf der autonomen Fabrik (10) optimiert wird.

8. Verfahren nach einem der vorhergehenden Ansprüche, **dadurch gekennzeichnet, dass** beim Produktionsplan (24, 26) ein Ressourcenverbrauch der autonomen Fabrik (10) optimiert wird.

9. Verfahren nach einem der vorhergehenden Ansprüche, **dadurch gekennzeichnet, dass** beim Produktionsplan (24, 26) ein Durchsatz der autonomen Fabrik (10) optimiert wird.

10. Verfahren nach einem der vorhergehenden Ansprüche, **dadurch gekennzeichnet, dass** zumindest das erste maschinelle Lernmodell (20) und/oder das zweite maschinelle Lernmodell (22) jeweils als neuronales Netzwerk bereitgestellt werden.

11. Verfahren nach einem der vorhergehenden Ansprüche, **dadurch gekennzeichnet, dass** eine Zielposition des Werkstücks (18) beim Übertragen des Werkstücks (18) an das Werkstück (18) gebunden bereitgestellt wird.

12. Verfahren nach einem der vorhergehenden Ansprüche, **dadurch gekennzeichnet, dass** eine Kommunikation (30) zwischen den beiden Anlagen (12, 14) mittels jeweiliger Kommunikationseinrichtung (46, 48) der Anlagen (12, 14) durchgeführt wird.

13. Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach einem der Ansprüche 1 bis 12 durchzuführen.

14. Computerlesbares Speichermedium mit einem Computerprogrammprodukt nach Anspruch 13.

15. Autonome Fabrik (10) mit zumindest zwei Anlagen, wobei die autonome Fabrik (10) zum Durchführen eines Verfahrens nach einem der Ansprüche 1 bis 12 ausgebildet ist.
